# EUROPEAN PATENT APPLICATION

(11) **EP 4 831 885 A1**
(43) Date of publication of application: **28.10.2026**
(21) Application number: 24906557.4
(22) Date of filing: 20.12.2024
(51) Int. Cl.: G06Q 10/0633, B65G 47/90, B65G 43/08, B67B 3/00, B67B 7/00

(54) **CONTROL METHOD AND APPARATUS FOR TERMINATING AUTOMATED PROCESS, ELECTRONIC DEVICE, AND STORAGE MEDIUM**

(30) Priority: 22.12.2023 CN 202311781049
(71) Applicant: Megarobo Technologies Co., Ltd., Beijing 102208 (CN)
(72) Inventor: LI, Gang, Beijing 102208 (CN); SHI, Peng, Beijing 102208 (CN)
(74) Representative: Grünecker Patent- und Rechtsanwälte PartG mbB
(86) International application number: PCT/CN2024/141079
(87) International publication number: WO 2025/131086

(57) **Abstract**

A control method and apparatus for terminating an automated process, an electronic device, and a storage medium. The method comprises: acquiring the current positions of all consumables in an automated process; on the basis of the current position of each consumable, dividing all of the consumables into a first group and a second group, the consumables in the first group being allowed to be located on paths from other consumables to specified positions, and the consumables in the second group being forbidden from be located on the paths from other consumables to the specified positions; on the basis of preset information, determining the path and time of each consumable to a respective specified position, the consumables in the first group going to the respective specified positions before the consumables in the second group; and, on the basis of the determined paths and times, controlling an actuator in an automated system to convey each consumable to the respective specified position.

## Description

This application claims the priority to Chinese Patent Application No.202311781049.0, titled "CONTROL METHOD AND APPARATUS FOR TERMINATING AUTOMATED PROCESS, ELECTRONIC DEVICE, AND STORAGE MEDIUM", filed on December 22, 2023 with the China National Intellectual Property Administration, which is incorporated herein by reference in its entirety.

### FIELD

The present disclosure relates to the field of automation, and in particular to a method for controlling automated process termination, an apparatus for controlling automated process termination, an electronic device, and a storage medium.

### BACKGROUND

Currently, many fields are continuously being automated to free up manpower and improve efficiency, and automation systems are widely used in automated manufacturing, automated detection, and automated testing or experimentation. In an automation system, automated operations may be performed on various consumables to implement an automated process.

Generally, during execution of an automated process, termination of the automated process may be required due to problems occurring in a device in the automation system or a request from a user to temporarily stop the process. When the automated process is terminated, consumables are required to move to predetermined designated positions. Specifically, when the automated process is terminated, a plan for process termination is performed to complete the termination. A solution for controlling automated process termination in the prior art adopts a full-throughput scheduling approach for consumables.

However, since the full-throughput scheduling approach is required, the above solution for controlling automated process termination in the prior art is not only logically complex and time-consuming, but also prone to errors, which may result in failures in the automation system.

### SUMMARY

According to a first aspect of the present disclosure, a method for controlling automated process termination is provided. The method comprises:
acquiring current positions of all consumables of an automated process in an automation system, where each of the consumables is for carrying a processing object of the automated process;
classifying, based on the current positions of all consumables, the consumables into a first group and a second group, where, among the consumables in the automation system, each consumable in the first group is permitted to be on a path of another consumable to a respective designated position, and each consumable in the second group is not permitted to be on a path of another consumable to a respective designated position;
for each consumable of the consumables, determining, based on predetermined information of the automated process, a path of the consumable to a respective designated position and a time instant at which the consumable is to be transferred to the designated position, where, among the consumables, each consumable in the first group is transferred to a respective designated position prior to any consumable in the second group being transferred to a respective designated position; and
for each consumable of the consumables, controlling, based on the determined path and the determined time instant, an actuator in the automation system to transfer the consumable to the designated position.

In a possible implementation, the classifying, based on the current positions of all consumables, the consumables into a first group and a second group comprises:
classifying, among the consumables, a consumable at a transfer position in the automation system into the first group; and
classifying, among the consumables, a consumable other than the consumable in the first group into the second group, where the transfer position is a position where a consumable is transferred between robotic arms or between a robotic arm and another device in the automation system.

In a possible implementation, for each consumable of the consumables, the determining, based on predetermined information of the automated process, a path of the consumable to a respective designated position and a time instant at which the consumable is to be transferred to the designated position, comprises:
among the consumables in the first group, determining, based on the predetermined information, that a blocking consumable is transferred to a designated position prior to a blocked consumable being transferred to a designated position, where
the blocking consumable blocks at least one consumable from being transferred to a designated position, and at least one blocking consumable is present on a path of the blocked consumable to a designated position.

In a possible implementation, for each consumable of the consumables, the determining, based on predetermined information of the automated process, a path of the consumable to a respective designated position and a time instant at which the consumable is to be transferred to the designated position, comprises:
determining, based on the predetermined information, that a free consumable in the first group is transferred to a respective designated position prior to another consumable in the first group being transferred to a respective designated position, where
a path of the free consumable to the designated position has no intersection with a path of the another consumable in the first group to the designated position.

In a possible implementation, for each consumable of the consumables, the determining, based on predetermined information of the automated process, a time instant at which the consumable is to be transferred to the designated position, comprises:
for each consumable of the consumables,
determining, based on the predetermined information, the actuator for transferring the consumable to the respective designated position;
determining, based on the predetermined information, an end time instant of a preceding step performed before transferring the consumable to the designated position, where the preceding step is performed prior to the consumable leaving a current position; and
determining, based on the determined actuator and the determined end time instant of the preceding step, the time instant at which the consumable is to be transferred to the designated position.

In a possible implementation, the determining, based on the determined actuator and the determined end time instant of the preceding step, the time instant at which the consumable is to be transferred to the designated position, comprises:
generating, based on the determined actuator and the determined end time instant of the preceding step, a step execution schedule; and
determining, based on the step execution schedule, the time instant at which the consumable is to be transferred to the designated position.

In a possible implementation, the method further comprises:
determining, based on the step execution schedule, whether a device position conflict exists in the automation system during transferring the consumable to the designated position based on the determined path and the determined time instant.

In a possible implementation, for each consumable of the consumables, the determining, based on predetermined information of the automated process, a time instant at which the consumable is to be transferred to the designated position, comprises:
for each consumable of the consumables, determining, based on the predetermined information, one or more steps for transferring the consumable to the designated position; and
determining, in response to steps for transferring the consumable being more than one, that the steps are to be performed in a consecutive manner.

In a possible implementation, for each consumable of the consumables, the determining, based on predetermined information of the automated process, a time instant at which the consumable is to be transferred to the designated position, comprises:
for each consumable of the consumables, determining, based on the predetermined information, a step for transferring the consumable to the designated position; and
determining, based on the predetermined information, that the respective steps for transferring different consumables are to be performed in a sequential manner.

According to a second aspect of the present disclosure, an apparatus for controlling automated process termination is provided, and the apparatus comprises:
a position acquisition module, configured to acquire current positions of all consumables of an automated process in an automation system, where each of the consumables is for carrying a processing object of the automated process;
a grouping module, configured to classify, based on the current positions of all consumables, the consumables into a first group and a second group, where among the consumables, a current position of each consumable in the first group lies between a starting position and a designated position of a path of another consumable, and the path of the another consumable is for transferring the another consumable from the starting position to the designated position;
a scheduling module, configured to, for each consumable of the consumables, determine, based on predetermined information of the automated process, a path of the consumable to a respective designated position and a time instant at which the consumable is to be transferred to the designated position, where among the consumables, each consumable in the first group is transferred to a respective designated position prior to any consumable in the second group being transferred to a respective designated position; and
a control module, configured to, for each consumable of the consumables, control, based on the determined path and the determined time instant, an actuator in the automation system to transfer the consumable to the designated position.

According to a third aspect of the present disclosure, an electronic device, comprising a processor and a memory, is provided. A computer program instruction is stored in the memory, and the computer program instruction, when run by the processor, executes the method for controlling automated process termination described above.

According to a fourth aspect of the present disclosure, a storage medium, storing a program instruction, is provided. The program instruction, when run, executes the method for controlling automated process termination described above.

According to the technical solution described above, it is determined whether a blocking relationship exists between consumables based on the current positions of the consumables, and a consumable that may block other consumables is transferred to its designated position on a priority basis. Compared with the full-throughput scheduling approach which requires planning for all consumables, the solution according to the present disclosure is logically simple and less time-consuming. With this solution, mutual blocking between consumables is avoided, thereby ensuring that the automation system can smoothly implement the termination of the automated process and preventing system failures.

The above description is merely an overview of the technical solutions according to the present disclosure. To enable a clearer understanding of the technical solutions according to the present disclosure, implement the technical solutions based on the content of the specification, and make the above and other objectives, features, and advantages of the present disclosure more apparent and comprehensible, specific embodiments of the present disclosure are explicitly described below.

The advantages and features of the present disclosure will be described in detail below with reference to the accompanying drawings.

### BRIEF DESCRIPTION OF THE DRAWINGS

The following drawings of the present disclosure are included as a part of the present disclosure for understanding the present disclosure. The drawings illustrate embodiments of the present disclosure and their description, and are used to explain the principles of the present disclosure. In the drawings:
FIG. 1 shows a schematic flowchart of a method for controlling automated process termination according to an embodiment of the present disclosure;
FIG. 2 shows a schematic diagram of an automation system according to an embodiment of the present disclosure;
FIG. 3 shows a schematic diagram of an automation system according to another embodiment of the present disclosure;
FIG. 4 shows a schematic block diagram of an apparatus for controlling automated process termination according to an embodiment of the present disclosure; and
FIG. 5 shows a schematic block diagram of an electronic device according to an embodiment of the present disclosure.

### DETAILED DESCRIPTION

In the following description, substantial details are provided to enable a thorough understanding of the present disclosure. However, it should be appreciated by those skilled in the art that the following description is intended to exemplarily illustrate only preferred embodiments of the present disclosure. Further, to avoid confusion with the present disclosure, technical features well known in the art are not described in detail.

As described above, the solution for controlling automated process termination in the prior art adopts a full-throughput scheduling approach for consumables. Specifically, in an automation system for executing an automated process, when the automated process is terminated, consumables are generally required to move to predetermined error positions. In this way, upon receiving a "termination" command, the automation system performs planning for automated process termination to obtain a schedule of post-termination steps, thereby completing a termination process. In the conventional method for planning process termination, full-throughput scheduling is performed, and the schedule is obtained. For example, in an automation system, two consumables, a first consumable and a second consumable with different throughputs, are present. When the "termination" command is received, the first consumable is being used for incubation in an incubator of the automation system, while the second consumable is located at an entrance or exit of the incubator. When planning for process termination, both the first consumable and the second consumable are required to be transferred to their corresponding error positions, for example, predetermined plate positions. Specific steps for each consumable to be transferred to a respective error position have already been determined when process parsing is performed. Therefore, when the process is terminated, full-throughput scheduling is required to be considered based on the specific steps. Specifically, when the process is terminated, the order in which the two consumables are to be transferred to the error positions is determined to obtain a schedule. However, since the full-throughput scheduling approach is required, the solution for planning termination in the prior art described above is logically complex and time-consuming. Moreover, an earlier consumable that is transferred to an error position may be blocked during the transfer by a later consumable that is transferred to an error position. That is, the path of the earlier consumable is temporarily occupied by the later consumable, resulting in mutual blocking between consumables, which prevents the automation system from successfully executing the "termination" command.

To at least partially address the technical issues described above, according to a first aspect of the present disclosure, a method for controlling automated process termination is provided. According to the method, based on positions and relative relationships of consumables, mutual blocking between consumables is prevented by processing consumables with different blocking situations in a differentiated manner. The method according to the embodiments of the present disclosure may be applied to automated processes for various suitable processing objects in various fields. For convenience of illustration, an automated process in an automation system in the biochemical field is taken as an example hereinafter for detailed explanation.

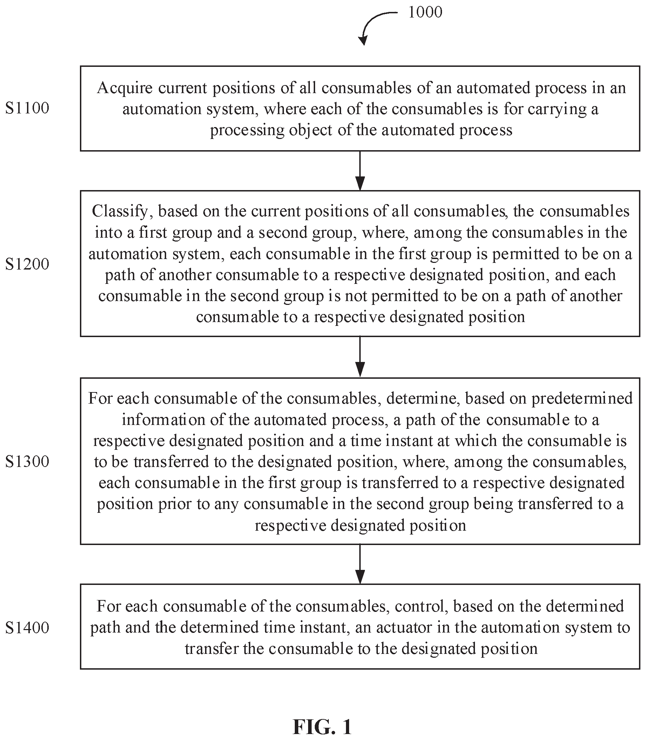

FIG. 1 shows a schematic flowchart of a method 1000 for controlling automated process termination according to an embodiment of the present disclosure. As shown in FIG. 1, the method 1000 may include the following steps: S1100, S1200, S1300 and S1400.

In step S1100, current positions of all consumables of an automated process in an automation system are acquired, where each of the consumables is for carrying a processing object of the automated process.

In an embodiment, the processing object of the automated process may be any suitable target as required. For example, for an automated process in the biochemical field, the processing object may be various substances in solid, liquid, or gaseous form. The consumables are for carrying the processing object. Specifically, the consumables may include a pipette tip, a centrifuge tube, a syringe, a beaker, a funnel, a piece of filter paper, a culture flask, a test tube, a culture plate, a cuvette, or the like. Alternatively, for automated processes in other fields, depending on the processing objects, the consumables may be other articles.

As described above, the automated process may be terminated due to reasons related to the automation system itself or due to user actions. After the automated process is terminated, current positions of all consumables of the automated process in the automation system are acquired. For example, in response to receiving a "termination" command, the automation system may acquire current positions of the consumables. It can be understood that, during execution of the automated process, different consumables may be located at different positions in the automation system. According to an example of the present disclosure, the automation system may include positions such as a liquid workstation, an incubator, a high-content device, and an error position. Consumables may be transferred between different stations by an actuator such as a robotic arm, for example, from the liquid workstation to the high-content device. Upon receiving the "termination" command, a respective current position of each consumable may be acquired according to the predetermined automated process.

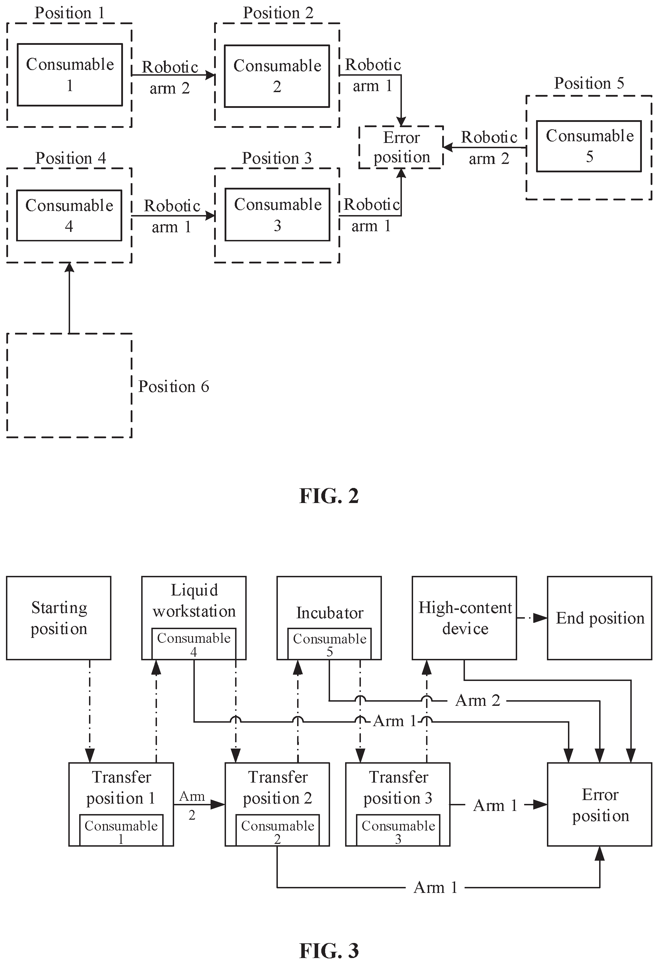

FIG. 2 shows a schematic diagram of an automation system according to an embodiment of the present disclosure. As shown in FIG. 2, the automated process includes five consumables: consumable 1, consumable 2, consumable 3, consumable 4, and consumable 5. In response to receiving a "termination" command, current position information of the above consumables of the automated process may be acquired. Specifically, for example, the current positions of consumable 1, consumable 2, consumable 3, consumable 4, and consumable 5 are position 1, position 2, position 3, position 4, and position 5, respectively. When the automated process is terminated, all consumables are transferred to their respective error positions, that is, designated positions. It can be understood that the error position shown in FIG. 2 includes respective positions for accommodating all the consumables, in other words, includes N error positions, where N is greater than or equal to 5.

In step S1200, based on the current positions of all consumables, all the consumables are classified into a first group and a second group. In the automation system, each consumable in the first group is permitted to be on a path of another consumable to a designated position, and each consumable in the second group is not permitted to be on a path of another consumable to a respective designated position.

In an embodiment, in the automation system, positions where consumables are ultimately transferred to when the automated process is terminated, that is, the designated positions described above, may be provided. It can be understood that respective designated positions for different consumables may be the same or different. In a specific example, an error position is provided in the automation system for placing a consumable when the automated process is terminated.

In step S1200, for each of the consumables, a consumable path of the consumable to an error position (designated position) may be determined. The consumable path refers to a route that the consumable is transferred from its starting position (current position) to its ending position (designated position) in the automation system. It can be understood that, for each of the consumables, the consumable path between its starting position and its ending position in the automation system is determined. For each of the consumables, depending on whether the current position of the consumable may block another consumable from being transferred to a designated position for the another consumable, the consumable is classified into a first group or a second group. Consumables in the first group are divided into two portions. Among the two portions of consumables in the first group, one portion includes consumables whose current positions block other consumables from being transferred to respective designated positions. That is, for each of the consumables in the first portion, a current position of the consumable is on a consumable path from a starting position to an ending position of another consumable, and thus the consumable is classified into the first group. For each of consumables in the other portion, although it may be a potential that the current position of the consumable blocks another consumable from being transferred to a designated position for the another consumable, the consumable does not block the another consumable from being transferred to the designated position at the current time instant (when the termination command is received). The second group includes consumables whose current positions cannot possibly block any other consumable from being transferred to the designated position. In summary, if a consumable may block another consumable from being transferred to the designated position, the consumable is classified into the first group. Whether a consumable in the first group blocks another consumable depends on whether the another consumable is on a path between a starting position of the another consumable and the current position of the consumable in the first group. In a case that the another consumable is on the path between the starting position of the another consumable and the current position of the consumable in the first group, it is determined that the consumable in the first group blocks the another consumable. In a case that the another consumable is not on the path between the starting position of the another consumable and the current position of the consumable in the first group, it is determined that the consumable in the first group does not block the another consumable. In a case that a current position of a consumable is not between a starting position and an ending position of a consumable path of any consumable, the consumable is classified into the second group.

In the embodiment shown in FIG. 2, current positions of consumable 1, consumable 2, consumable 3, consumable 4 and consumable 5 are determined to be position 1, position 2, position 3, position 4 and position 5, respectively, in step S1100. Consumable 1 and consumable 5 do not block any other consumable from being transferred to an error position, that is, consumable 1 and consumable 5 are not on a path of any other consumable to an error position, so that consumable 1 and consumable 5 are classified into the second group. Consumable 1 passes through position 2 when being transferred to a first error position corresponding to consumable 1, that is, position 2 lies in the consumable path of consumable 1. In this case, if consumable 1 is first transferred to its error position, a system conflict will occur, and consumable 1 cannot be smoothly transferred to its error position. Thus, since consumable 2 blocks consumable 1 from being transferred to the error position, consumable 2 is classified into the first group. As shown in FIG. 2, consumable 3, similar to consumable 2, blocks consumable 4 from being transferred to an error position, and is also classified into the first group. As for consumable 4 located at position 4, a consumable located at position 6 passes through position 4 when being transferred to its error position. Although at a current instant after the automated process is terminated, no consumable is present at position 6, in the following embodiment, for example, the consumable at position 4 blocks the consumable at position 6 from being transferred to a designated position. In an embodiment, position 4 is an entrance/exit of a device, and position 6 is a position inside the device. If a consumable is at position 6 inside the device when the "termination" command is received, consumable 4 located at the entrance/exit of the device inevitably blocks the consumable inside the device when the consumable is transferred to the designated position. Therefore, consumable 4 may block a consumable located at position 6 from being transferred to an error position. In the above embodiment, although consumable 4 does not actually block another consumable, consumable 4 is still classified into the first group.

In summary, each consumable in the second group does not block another consumable from being transferred to a designated position, and each consumable in the first group may block another consumable from being transferred to a designated position. The consumable in the first group may actually block another consumable from being transferred to a designated position, or may not actually block another consumable from being transferred to a designated position.

In step S1300, for each consumable of the consumables, based on predetermined information of the automated process, a path of the consumable to a respective designated position and a time instant at which the consumable is to be transferred to the designated position are determined. Among the consumables, each consumable in the first group is transferred to a respective designated position prior to any consumable in the second group being transferred to a respective designated position.

It can be understood that the automated process, which is planned in advance, includes predetermined information. The predetermined information may include information of various steps in the automated process, for example, information for actuator performing the steps, execution duration information of the steps, or the like. In the automated process, according to a predetermined step, a consumable may be transferred from one position to a next position by an actuator, or the consumable may be processed at a current position by an actuator. When a "termination" command is received, no matter which position a consumable is located at, the actuator is controlled according to the predetermined information to transfer the consumable from its current position to its error position corresponding to the current position. It should be understood that, when the automated process is terminated, the steps executed are different from those executed during normal operation.

In step S1200, all consumables are classified into the first group or the second group, so that grouping information of all the consumables are obtained. In step S1300, based on the predetermined information of the automated process and the grouping information described above, for each of the consumables, a path of the consumable to a respective designated position and a time instant at which the consumable is to be transferred to the designated position are determined. Based on the predetermined information of the automated process, each consumable in the first group is controlled to move to a respective designated position prior to any consumable in the second group being controlled to move to a respective designated position.

The automation system shown in FIG. 2 is taken as an example. A predetermined step for transferring a consumable located at position 1 to its error position is that robotic arm 2 transfers the consumable from position 1 to position 2, and then robotic arm 1 transfers the consumable from position 2 to its error position. A predetermined step for transferring a consumable located at position 2 to its error position is that robotic arm 1 transfers the consumable from position 2 to its error position. A path of a consumable located at position 3 to its error position is implemented by: robotic arm 1 transferring the consumable from position 3 to its error position. A path of a consumable located at position 4 to its error position is implemented by: robotic arm 1 transferring the consumable from position 4 to error position 4. A path of a consumable located at position 5 to its error position is implemented by: robotic arm 2 transferring the consumable from position 5 to error position 5. In a case that the consumables located at position 4 and position 5 are classified into the second group, and the consumables in the second group may be blocked by the consumables in the first group during transfer. Therefore, the consumables located at position 1, position 2 and position 3 may be transferred to their respective error positions prior to the consumables located at position 4 and position 5 being transferred. In a case that no consumable is present at a position, the consumable transfer step corresponding to the position is not performed. The automation system may further obtain time information of the current time instant. In addition to transferring consumables according to the above-described priorities, the time instant at which a consumable is to be transferred to its designated position may be determined based on execution duration information of each step in the predetermined information and the time information of the current time instant.

In step 1400, for each consumable of the consumables, based on the determined path and the determined time instant, an actuator in the automation system is controlled to transfer the consumable to the designated position.

The actuator may include the robotic arm described above, or a conveyor belt, or other devices. The actuator may be configured to transfer a consumable between different positions, for example, to transfer consumable 1 from position 1 to position 2.

In step S1400, according to the paths and the time instants determined in step S1300, the actuator is controlled to transfer all the consumables, and thus all the consumables are located at their respective designated positions, so that an intended automated process termination is automatically achieved.

According to the technical solution described above, it is determined whether a possible blocking relationship exists between consumables based on the current positions of the consumables, and a consumable that may block other consumables is transferred to its designated position on a priority basis. Compared with the full-throughput scheduling approach which requires planning for all consumables, the solution according to the present disclosure is logically simple and less time-consuming. With this solution, mutual blocking between consumables is avoided, thereby ensuring that the automation system can smoothly implement the termination of the automated process. An independent schedule is generated for planning, preventing system failures.

In an embodiment, the classifying, based on the current positions of all consumables, the consumables into a first group and a second group in step S1200 includes the following steps S1210 and S1220.

In step S1210, a consumable at a transfer position among the consumables in the automation system is classified into the first group.

The transfer position is a position where a consumable is transferred between robotic arms or between a robotic arm and another device in the automation system. By way of example, a consumable taken out by a robotic arm from an incubator may be temporarily stored at the transfer position, and subsequently, another robotic arm transfers the consumable stored at the transfer position to a high-content device. Since a temporary storage is required at the transfer position during the transfer of a consumable between two devices, when the consumable is temporarily stored at the transfer position, there is a high risk that the consumable may block another consumable from passing through this transfer position to reach the designated position for the another consumable. To simplify the control logic, all consumables at the transfer position are classified into the first group and are prioritized in scheduling.

In step S1220, among the consumables, a consumable other than the consumable in the first group is classified into the second group. According to an embodiment of the present disclosure, only a first group and a second group are provided in the automation system, and therefore all consumables other than the consumable in the first group are classified into the second group.

FIG. 3 shows a schematic diagram of an automation system according to another embodiment of the present disclosure. As shown in FIG. 3, the automation system has nine different positions, each of which may be provided to store or process a consumable. In other words, when the automation system executes an automated process, a consumable for carrying a processing object may be located at one of these nine positions. For simplicity of description, it is assumed that the automation system is provided with a parallel processing capacity of five, referred to as "throughputs" in this context, each throughput corresponding to one consumable. Specifically, in a case that the automated process is normally completed, a consumable is transferred from a starting position, sequentially through a liquid workstation, an incubator, and a high-content device, to an ending position. When the automated process is terminated, all consumables are transferred to their respective error positions, that is, designated positions. It can be understood that the error position shown in FIG. 3 includes multiple positions for respectively accommodating corresponding consumables, where each consumable corresponds to a respective error position. For example, the error position may be a predetermined plate position.

For example, in this automation system, transfer position 1 is configured between the starting position and the liquid workstation, transfer position 2 is configured between the liquid workstation and the incubator, and transfer position 3 is configured between the incubator and the high-content device. According to an automated process of an embodiment of the present disclosure, during transfer of a consumable from the starting position to the liquid workstation, transfer position 1 is passed through; transfer position 2 is provided between the liquid workstation and the incubator, and during transfer of a consumable in the liquid workstation to the incubator, transfer position 2 is passed through; and so on. A consumable located at the starting position passes through transfer position 1 when being transferred to the error position. A consumable located at transfer position 1 passes through transfer position 2 when being transferred to the error position. A consumable located at transfer position 3 is directly transferred to the error position. Consumables located at the liquid workstation, the incubator and the high-content device may further be directly transferred to their respective error positions. It can be understood that, in the automated process according to this embodiment, a consumable located at the incubator may be directly transferred to the error position, alternatively, the automation system further supports an automated process in which the consumable at the incubator being transferred to the error position via transfer position 3. Therefore, based on the automation system described above, it is possible that the consumable at the transfer position blocks another consumable from being transferred to the error position, and thus all consumables at transfer position 1, transfer position 2 and transfer position 3 are classified into the first group. For consumables at positions other than the transfer position, although they may be on the paths of other consumables to the ending positions, they are not on any path of another consumable to the error position, and thus such consumables may be classified into the second group.

In the technical solution described above, the special feature of the transfer position in the automation system and the feature that a consumable at a position other than the transfer position do not block any consumable from being transferred to a designated position are fully considered. Thus, consumables at transfer positions are directly determined as consumables of the first group, and other consumables are determined as consumables of the second group. The solution is logically simple and easy to be implemented. Further, any misclassification of consumables into the second group is avoided, that is, no consumable that should be in the first group is omitted. As a result, smooth execution of the automated process is ensured.

In an embodiment, for each consumable of the consumables, the determining, based on predetermined information of the automated process, a path of the consumable to a respective designated position and a time instant at which the consumable is to be transferred to the designated position in step S1300 includes: among the consumables in the first group, determining, based on the predetermined information, that a blocking consumable is transferred to a designated position prior to a blocked consumable being transferred to a designated position.

The blocking consumable blocks at least one consumable from being transferred to a designated position, and at least one blocking consumable is present on a path of the blocked consumable to a designated position. Mutual blocking may also exist among the consumables in the first group. A consumable in the first group may block a consumable in the second group, or may block another consumable in the first group. According to the predetermined information of the automated process, blocking relationships between various positions in the automation system, that is, blocking relationships between consumables respectively located at the various positions, may be acquired. In this step, for any pair of consumables having a blocking relationship, the blocking consumable is transferred to its designated position prior to the blocked consumable being transferred to its designated position.

In the automation system shown in FIG. 3, according to an automated process of an embodiment of the present disclosure, a consumable at transfer position 1 passes through transfer position 2 when being transferred to its error position. A consumable at transfer position 2 not only blocks a consumable at the starting position from being transferred to the error position, but also blocks a consumable at transfer position 1 from being transferred to the error position.

In the automated process described above, the step of transferring consumable 1 to the error position includes step a and step b. In step a, consumable 1 is transferred by robotic arm 2 from transfer position 1 to transfer position 2, and in step b, consumable 1 is transferred by robotic arm 1 from transfer position 2 to error position 1. Since consumable 2 located at transfer position 2 blocks execution of step a for consumable 1, consumable 2 may be first transferred to error position 2, and then consumable 1 is transferred to error position 1. In this way, after the blocking consumable (consumable 2) is moved away, the path for the blocked consumable (consumable 1) is cleared.

In the technical solution described above, consumables in the first group are processed according to different situations. The blocking consumable in the first group is transferred to the error position prior to the blocked consumable in the first group being transferred to the error position. In this way, mutual blocking among consumables in the first group is avoided, thereby ensuring smooth execution of the automated process.

In an embodiment, for each consumable of the consumables, the determining, based on predetermined information of the automated process, a path of the consumable to a respective designated position and a time instant at which the consumable is to be transferred to the designated position in step S1400 includes: determining, based on the predetermined information, that a free consumable in the first group is transferred to a respective designated position prior to another consumable in the first group being transferred to a respective designated position.

A path of the free consumable to the designated position has no intersection with a path of the another consumable in the first group to the designated position. According to the predetermined information of the automated process, it is determined which consumable at which position is the free consumable. The free consumable does not block another consumable from being transferred to a designated position, and the free consumable is not blocked by another consumable from being transferred to a designated position.

Reference is made to the embodiment shown in FIG. 3. Consumable 3 in the first group is a free consumable. Consumable 3 does not affect the transfer of consumable 1 and consumable 2 to their respective error positions, and consumable 3 is not blocked by any other consumable from being transferred to the error position of consumable 3. Therefore, consumable 3 is first transferred to error position 3, and then consumable 1 and consumable 2 are transferred to error position 1 and error position 2, respectively. As described above, consumable 2 may be transferred to error position 2 before consumable 1 is transferred to error position 1.

In the technical solution described above, the free consumable is first transferred to its designated position, and then other consumables are transferred to their respective designated positions. Since the path of the free consumable has no intersection with the paths of the other consumables, the path of the free consumable may be planned independently without considering conflicts or mutual blocking with other consumables, thereby simplifying the complexity of path planning.

In an embodiment, for each consumable of the consumables, the determining, based on predetermined information of the automated process, a path of the consumable to a respective designated position and a time instant at which the consumable is to be transferred to the designated position in step S1400 includes following steps S1410 to S1430.

In step S1410, for each consumable of the consumables, based on the predetermined information, the actuator for transferring the consumable to the respective designated position is determined.

In designing of an automated process, an actuator for transferring a consumable between different positions is determined. Based on the predetermined information, a current position of the consumable and a next position to which the consumable is to be transferred may be determined, and then the actuator for transferring the consumable in the current position to the next position is determined. The actuator may be, for example, a specific robotic arm, a specific conveyor mechanism, or the like.

Reference is made to FIG. 3. In the automated process shown in FIG. 3, the actuator for transferring consumable 1 from transfer position 1 to the error position includes robotic arm 2 and robotic arm 1 which perform the transfer operations successively; and the actuator for transferring consumable 2 from transfer position 2 to the error position includes robotic arm 1.

In step S1420, based on the predetermined information, an end time instant of a preceding step performed before transferring the consumable to the designated position is determined, where the preceding step is performed prior to the consumable leaving a current position.

It can be understood that an automated process is a system engineering in which different steps affect each other. Due to various factors such as actuators and processing objects, steps are performed in an execution order. For example, steps for one actuator can only be executed serially, that is, a next step is executed only after a current step is completed. For another example, the operation steps for one consumable carrying a processing object may generally only be executed serially. For one consumable, only after the operation of a current actuator performed on the consumable is completed, the next actuator can be controlled to perform an operation on the consumable. A step that is required to be executed before a current step is referred as the preceding step of the current step.

In a case that the automated process is terminated, each consumable is transferred to a respective designated position. In this case, the transfer step for the consumable is executed only after a current step performed on a processing object carried by the consumable in the automated process is completed. Therefore, a preceding step with respect to the step of transferring the consumable includes the step currently being executed on the processing object in the automated process at the time instant when the automated process is terminated. It can be understood that the quantity of preceding steps with respect to the step of transferring the consumable to the designated position may be one or more. Based on predetermined information of the automated process, all preceding steps before each consumable leaves its current position are determined, and then time instants at which the preceding steps are performed are determined.

Reference is made to FIG. 3, when a "termination" command is received, consumable 5 may be located in an incubator for performing incubation. In this scenario, the preceding step with respect to the step of consumable 5 leaving the incubator to the error position is an incubation step. Based on the predetermined information of the automated process, an end time instant of the incubation step is determined.

In step S1430, based on the determined actuator and the determined end time instant of the preceding step, the time instant at which the consumable is to be transferred to the designated position is determined.

Based on the actuator determined in step S1410 and the end time instant of the preceding step determined in step S1420, a consumable which corresponds to an available actuator and has a preceding step ending relatively early may be scheduled preferentially. Specifically, for each step, a latest end time instant of a preceding step with respect to the step may be obtained as an earliest start time instant of the step.

In the above description regarding step S1400, step S1410 is performed before step S1420. However, it can be understood that the execution order of step S1410 and step S1420 is only an example. In practice, the two steps may be performed in parallel, or step S1420 may be performed before step S1410.

In the technical solution described above, under the condition that an actuator for transferring a consumable is available, a consumable having a preceding step completed earlier may be preferentially transferred to its designated position, rather than having the entire system wait for a consumable with a preceding step completed relatively later. In this way, the time cost is reduced and the termination of the entire process is further accelerated.

In an embodiment, for each consumable of the consumables, the determining, based on predetermined information of the automated process, a time instant at which the consumable is to be transferred to the designated position in step S1400 includes step 1440 and step 1450. In step 1440, for each consumable of the consumables, based on the predetermined information, one or more steps for transferring the consumable to the designated position is determined. In step 1450, in response to more than one step required for a consumable, it is determined that the steps are to be performed in a consecutive manner after the end time instant of the preceding step.

For any consumable, one or more steps may be required for transferring the consumable from a current position to a designated position. Based on the predetermined information, the information of various steps described above is determined. By way of example, reference is made to the automation system shown in FIG. 3. Table 1 shows consumables for running and associated steps to be executed in the automation system when the automated process shown in FIG. 3 is terminated, according to an embodiment of the present disclosure. As shown in Table 1, for each consumable, the one or more steps for transferring the consumable to the error position are classified into an independent step group.

**Table 1**

| Consumable group | Consumable name | Step group |
|---|---|---|
| | Consumable 3 | Step group 1: |
| First group | | (1) Robotic arm 1 transfers the consumable from transfer position 3 to error position 3 (Step 10) |
| | Consumable 2 | Step group 2: |
| | | (1) Robotic arm 1 transfers the consumable from transfer position 2 to error position 2 (Step 11) |
| | Consumable 1 | Step group 3: |
| | | (1) Robotic arm 2 transfers the consumable from transfer position 1 to transfer position 2 (Step 12); |
| | | (2) Robotic arm 1 transfers the consumable from transfer position 2 to error position 1 (Step 13) |
| Second group | Consumable 4 | Step group 4: |
| | | (1) Robotic arm 1 transfers the consumable out of the liquid workstation to error position 4 (Step 14); |
| | | Device door is closed (Step 15) |
| | Consumable 5 | Step group 5: |
| | | (1) Robotic arm 2 transfers the consumable out of the incubator to error position 5 (Step 16) |

As shown in FIG. 3, consumable 1 is currently located at transfer position 1, consumable 2 is currently located at transfer position 2, and consumable 3 is currently located at transfer position 3. To transfer consumable 1 to its designated position, that is, error position 1, step 12 is performed first to transfer the consumable 1 from transfer position 1 to transfer position 2, and then step 13 is performed to transfer the consumable 1 from transfer position 2 to error position 1. Consumable 2 is directly transferred from its current position, transfer position 2, to its designated position, error position 2, in step 11. Consumable 3 is directly transferred from its current position, transfer position 3, to its designated position, error position 3, in step 10. Transfer of consumable 4 and consumable 5 is similar to consumable 2 and consumable 3, which is not described again for brevity. Thus, two steps are required to transfer consumable 1 to error position 1, and one step is required to transfer consumable 2 to error position 2 and one step is required to transfer consumable 3 to error position 3. For any of consumables 2, 3, 4 and 5, only one step is required to transfer the consumable to its error position, and after reaching the error position, the consumable will no longer be associated with other consumables. In response to multiple steps being required for a consumable, for example, consumable 1, it is determined that the steps are executed in a consecutive manner after the end time instant of the preceding step, that is, step 12 and step 13 described above are executed consecutively. In a case that, another task other than step 13 is performed after step 12 is performed on consumable 1, a situation may occur in which, for example, consumable 4 may be transferred passing through transfer position 2 while the path passing through transfer position 2 is blocked. Therefore, step 12 and step 13 for transferring consumable 1 to error position 1 are executed in a consecutive manner until consumable 1 reaches error position 1. In this condition, consumable 1 is no longer associated with other consumables. As a result, mutual blocking between consumables is avoided. In addition, performing step 12 and step 13 for consumable 1 in a consecutive manner reduces time costs.

As shown in Table 1 and described above, from the start of execution of a step group to the completion of all the step in the step group, no step in other step groups is performed. The steps within each step group are serially and consecutively executed, and step 13 is executed immediately after step 12 is completed until all steps in the step group are completed. To ensure the consecutive execution of the steps in a step group, an earliest start time instant of each step group may be obtained. The order of steps for transferring a consumable to the error position, that is, the order between step 12 and step 13 described above, is determined based on predetermined information of the automated process and is not changed due to grouping or preceding steps in the present disclosure.

In the technical solution described above, the steps required for each consumable to be transferred to its designated position are executed in a consecutive manner. As a result, not only the processing logic is simple, but also mutual blocking in the system is avoided. Further, the time efficiency of the automated process termination is improved.

In an embodiment, for each consumable of the consumables, the determining, based on predetermined information of the automated process, a time instant at which the consumable is to be transferred to the designated position in step S1400 includes step 1460 and step 1470. In step 1460, for each consumable of the consumables, based on the predetermined information, a step for transferring the consumable to the designated position is determined. In step S1470, based on the predetermined information, it is determined that respective steps for transferring different consumables are performed in a sequential manner.

Step S1460 is similar to step S1440 and is not described again for brevity. In step S1470, it is determined that different consumables are processed in a sequential manner. Reference is made to Table 1, the step groups in Table 1 are for different consumables, and the different step groups are executed in a sequential manner. That is, after step group 1 is completed, step group 2 is executed; after step group 2 is completed, step group 3 is executed, and so on. Different step groups may be executed non-consecutively. For example, there may be a time interval between a time instant at which step group 1 is performed and a time instant at which step group 2 is performed.

In this example, steps in different step groups for different consumables are not interleaved for execution. As described above, if step 11 in step group 2 is executed after step 12 in step group 3 and before step 13 in step group 3, a situation might occur in which consumable 4 passes through transfer position 2, while this path for transferring consumable 4 is blocked. That is, a conflict between consumables at transfer position 2 may occur. Therefore, step group 2 and step group 3 are executed one after another, that is, the step for transferring consumable 2 to error position 2 and the step for transferring consumable 1 to error position 1 are performed in a sequential manner.

In the technical solution described above, the respective steps for transferring different consumables to their respective designated positions are performed sequentially. That is, after one consumable is transferred to its designated position, the transfer of the next consumable to its designated position begins. In this way, mutual blocking between consumables is avoided and smooth termination of the automated process is ensured.

In an embodiment, the determining, based on the determined actuator and the determined end time instant of the preceding step, the time instant at which the consumable is to be transferred to the designated position in step 1430 includes step 1431 and step 1432. In step 1431, based on the determined actuator and the determined end time instant of the preceding step, a step execution schedule is generated. In step 1432, based on the step execution schedule, the time instant at which the consumable is to be transferred to the designated position is determined.

As described above, before the preceding step with respect to the step for transferring a consumable to the designated position is completed, the consumable does not move. At a certain time instant, remaining durations for different consumables to complete their respective preceding steps may be different. Table 2 shows the preceding steps with respect to transferring the consumables shown in Table 1 to their respective error positions. As shown in Table 2, steps 7 to 9 are preceding steps.

**Table 2**

| Consumable | In-group step | Devices for all steps in the group | Preceding step | Latest end time instant of preceding step |
|---|---|---|---|---|
| Consumable 3 | Step 10 | Robotic arm 1 | Step 9 | 10:05:20 |
| Consumable 2 | Step 11 | Robotic arm 1 | Step 9 | 10:05:20 |
| Consumable 1 | Step 12, Step 13 | Robotic arm 1, Robotic arm 2 | Step 9, Step 8 | 10:11:05 |
| Consumable 4 | Step 14, Step 15 | Robotic arm 1, Liquid workstation | Step 9, Step 7 | 10:32:15 |
| Consumable 5 | Step 16 | Robotic arm 2 | Step 8 | 10:11:05 |

The step execution schedule of all steps for transferring a consumable to its designated position may be set according to the end time instant of the preceding step, and the consumable with an earlier end time instant of the preceding step is preferentially transferred to the designated position. In addition, the grouping of a consumable is required to be considered when determining the order of transferring the consumable, which is not described again herein. Further, it takes time for an actuator to transfer a consumable to the designated position, and therefore a duration for the actuator to perform the transfer is required to be considered when generating the step execution schedule.

Table 3 shows a step execution schedule for transferring the consumables shown in Table 1 to their respective designated positions. In Table 3, "n#" in the first column indicates that the step is executed by robotic arm n. For example, "1# Step 10" indicates that the actuator for step 10 is robotic arm 1. As shown in Table 3, step 10 may be scheduled to be performed immediately after the completion of step 9 at time 10:05:20, step 10 takes 20 seconds to complete, and then step 11 is executed, and so on. In this way, the time instants for steps required to transfer the consumables to the respective designated positions are calculated, thereby reducing waiting duration between consumables and waste of resources.

**Table 3**

| Step\ Time instant | 10:05 :20 | 10:05 :40 | 10:06 :00 | 10:11 :05 | 10:11 :25 | 10:11 :45 | 10:12 :05 | 10:32 :15 | 10:32 :35 | 10:32 :55 |
|---|---|---|---|---|---|---|---|---|---|---|
| 1# Step 10 | Start | End | | | | | | | | |
| 1# Step 11 | | Start | End | | | | | | | |
| 2# Step 12 | | | | Start | End | | | | | |
| 1# Step 13 | | | | | Start | End | | | | |
| 1# Step 14 | | | | | | | | Start | End | |
| Step 15 | | | | | | | | | Start | End |
| 2# Step 16 | | | | | | Start | End | | | |

In the technical solution described above, by generating the step execution schedule, the system reasonably determines the execution time instant of each step according to predetermined time requirements and actuators, thereby avoiding conflicts between steps and mutual blocking between consumables. Thus, the execution efficiency and accuracy of the process are improved. In addition, the system is assisted to automatically control the execution time instants and order of all the steps during operation, without the requirement for real-time decision-making and adjustment. In this way, the complexity of process control is simplified, and manual intervention is reduced. As a result, the system can reasonably arrange the execution time instant of each step and resource utilization, thereby optimizing task scheduling.

In an embodiment, the method further includes step S1500. In step S1500, based on the step execution schedule, for each consumable of the consumables, it is determined whether a device position conflict exists in the automation system during transferring the consumable to the designated position based on the determined path and the determined time instant.

In an embodiment, plate position activities and lid position activities may be generated based on the step execution schedule. Plate position activities of all throughputs and all steps are traversed to determine whether a plate position conflict exists. Lid position activities of all throughputs and all steps are traversed to determine whether a lid position conflict exists.

Both a plate position and a lid position are device positions. A device position conflict refers to that a position is occupied by different consumables at the same time. In an automation system, the position is required to be released before it is occupied again. If the position can hold only one consumable and is occupied before being released, a conflict occurs, causing a collision. By way of example, a lid position can accommodate only one lid. If a lid is already located at the lid position, that is, the lid position is in an occupied state, and the automation program controls an actuator to place another lid into the lid position, a conflict occurs, and the two lids collide. To place another lid into the lid position, the lid currently located at the lid position is required to be transferred away first, that is, to release the lid position.

Before controlling the consumables to move to their respective designated positions based on the step execution schedule, it is first determined whether a plate position conflict or a lid position conflict exists in the automation system, so that early warning is provided to prompt personnel to resolve the position conflict. In this way, collision accidents are avoided when execution starts, and the requirement to temporarily adjust the step execution schedule after a conflict occurs is further avoided, so that smooth automated process termination is ensured.

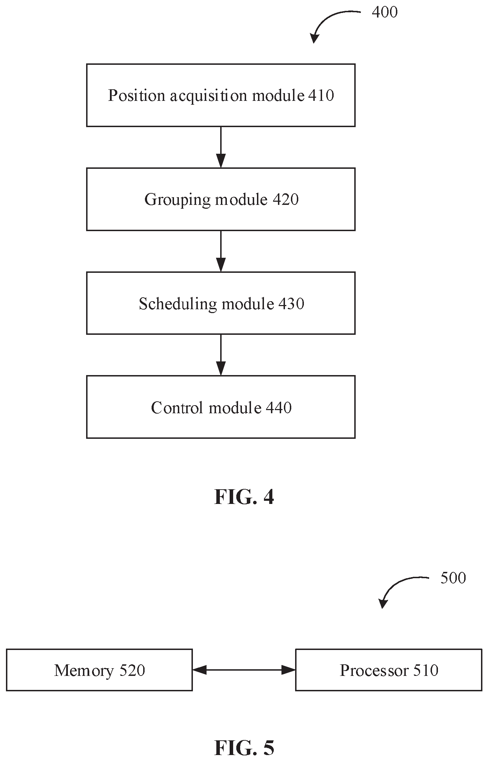

In a second aspect, an apparatus for controlling automated process termination is provided according to the present disclosure. FIG. 4 shows a schematic block diagram of an apparatus 400 for controlling automated process termination according to an embodiment of the present disclosure. As shown in FIG. 4, the apparatus 400 includes: a position acquisition module 410, a grouping module 420, a scheduling module 430, and a control module 440.

The position acquisition module 410 is configured to acquire current positions of all consumables of an automated process in an automation system, where each of the consumables is for carrying a processing object of the automated process.

The grouping module 420 is configured to classify, based on the current positions of all consumables, the consumables into a first group and a second group, where, among the consumables in the automation system, each consumable in the first group is permitted to be on a path of another consumable to a respective designated position, and each consumable in the second group is not permitted to be on a path of another consumable to a respective designated position.

The scheduling module 430 is configured to, for each consumable of the consumables, determine, based on predetermined information of the automated process, a path of the consumable to a respective designated position and a time instant at which the consumable is to be transferred to the designated position, where among the consumables, each consumable in the first group is transferred to a respective designated position prior to any consumable in the second group being transferred to a respective designated position.

The control module 440 is configured to, for each consumable of the consumables, control, based on the determined path and the determined time instant, an actuator in the automation system to transfer the consumable to the designated position.

According to a third aspect of the present disclosure, an electronic device is further provided. FIG. 5 shows a schematic block diagram of an electronic device 500 according to an embodiment of the present disclosure. As shown in FIG. 5, the electronic device 500 includes a processor 510 and a memory 520, where a computer program instruction is stored in the memory 520. The computer program instruction, when run by the processor 510, executes the method 1000 for controlling automated process termination described above.

According to a fourth aspect of the present disclosure, a storage medium is further provided. A program instruction and parameter required by the program are stored in the storage medium. The program instruction, when run, executes corresponding steps of the method 1000 for controlling automated process termination according to the embodiments of the present disclosure. The storage medium may include, for example, a memory component, a hard disk, a read-only memory (ROM), an erasable programmable read-only memory (EPROM), a portable read-only memory (CD-ROM), a USB memory, or any combination of the storage media described above.

Those of ordinary skill in the art can understand specific implementation solutions of the above-described apparatus for controlling automated process termination, the electronic device, and the storage medium by reading the above related description of the method for controlling automated process termination. For brevity, details are not described herein again.

### Embodiments

### Embodiment 1

A method for controlling automated process termination is provided, and the method comprises:
acquiring current positions of all consumables of an automated process in an automation system, where each of the consumables is for carrying a processing object of the automated process;
classifying, based on the current positions of all consumables, the consumables into a first group and a second group, where among the consumables in the automation system, each consumable in the first group is permitted to be on a path of another consumable to a respective designated position, and each consumable in the second group is not permitted to be on a path of another consumable to a respective designated position;
for each consumable of the consumables, determining, based on predetermined information of the automated process, a path of the consumable to a respective designated position and a time instant at which the consumable is to be transferred to the designated position, where, among the consumables, each consumable in the first group is transferred to a respective designated position prior to any consumable in the second group being transferred to a respective designated position; and
for each consumable of the consumables, controlling, based on the determined path and the determined time instant, an actuator in the automation system to transfer the consumable to the designated position.

### Embodiment 2

The method described in embodiment 1 is provided, where the classifying, based on the current positions of all consumables, the consumables into a first group and a second group comprises:
classifying, among the consumables, a consumable at a transfer position in the automation system into the first group; and
classifying, among the consumables, a consumable other than the consumable in the first group into the second group, where the transfer position is a position where a consumable is transferred between robotic arms or between a robotic arm and another device in the automation system.

### Embodiment 3

The method described in embodiments 1 or 2 is provided, where for each consumable of the consumables, the determining, based on predetermined information of the automated process, a path of the consumable to a respective designated position and a time instant at which the consumable is to be transferred to the designated position, comprises:
among the consumables in the first group, determining, based on the predetermined information, that a blocking consumable is transferred to a designated position prior to a blocked consumable being transferred to a designated position, where
the blocking consumable blocks at least one consumable from being transferred to a designated position, and at least one blocking consumable is present on a path of the blocked consumable to a designated position.

### Embodiment 4

The method described in any one of embodiments 1 to 3 is provided, where for each consumable of the consumables, the determining, based on predetermined information of the automated process, a path of the consumable to a respective designated position and a time instant at which the consumable is to be transferred to the designated position, comprises:
determining, based on the predetermined information, that a free consumable in the first group is transferred to a respective designated position prior to another consumable in the first group being transferred to a respective designated position, where
a path of the free consumable to the designated position has no intersection with a path of the another consumable in the first group to the designated position.

### Embodiment 5

The method described in any one of embodiments 1 to 4 is provided, where for each consumable of the consumables, the determining, based on predetermined information of the automated process, a time instant at which the consumable is to be transferred to the designated position, comprises:
for each consumable of the consumables,
determining, based on the predetermined information, the actuator for transferring the consumable to the respective designated position;
determining, based on the predetermined information, an end time instant of a preceding step performed before transferring the consumable to the designated position, where the preceding step is performed prior to the consumable leaving a current position; and
determining, based on the determined actuator and the determined end time instant of the preceding step, the time instant at which the consumable is to be transferred to the designated position.

### Embodiment 6

The method described in any one of embodiments 1 to 5 is provided, where the determining, based on the determined actuator and the determined end time instant of the preceding step, the time instant at which the consumable is to be transferred to the designated position, comprises:
generating, based on the determined actuator and the determined end time instant of the preceding step, a step execution schedule; and
determining, based on the step execution schedule, the time instant at which the consumable is to be transferred to the designated position.

### Embodiment 7

The method described in any one of embodiments 1 to 6 is provided, and the method further comprises:
determining, based on the step execution schedule, whether a device position conflict exists in the automation system during transferring the consumable to the designated position based on the determined path and the determined time instant.

### Embodiment 8

The method described in any one of embodiments 1 to 7 is provided, where for each consumable of the consumables, the determining, based on predetermined information of the automated process, a time instant at which the consumable is to be transferred to the designated position, comprises:
for each consumable of the consumables, determining, based on the predetermined information, one or more steps for transferring the consumable to the designated position; and
determining, in response to steps for transferring the consumable being more than one, that the steps are to be performed in a consecutive manner.

### Embodiment 9

The method described in any one of embodiments 1 to 8 is provided, where for each consumable of the consumables, the determining, based on predetermined information of the automated process, a time instant at which the consumable is to be transferred to the designated position, comprises:
for each consumable of the consumables, determining, based on the predetermined information, a step for transferring the consumable to the designated position; and
determining, based on the predetermined information, that the respective steps for transferring different consumables are to be performed in a sequential manner.

### Embodiment 10

An apparatus for controlling automated process termination is provided, and the apparatus comprises:
a position acquisition module, configured to acquire current positions of all consumables of an automated process in an automation system, where each of the consumables is for carrying a processing object of the automated process;
a grouping module, configured to classify, based on the current positions of all consumables, the consumables into a first group and a second group, where among the consumables, a current position of each consumable in the first group lies between a starting position and a designated position of a path of another consumable, and the path of the another consumable is for transferring the another consumable from the starting position to the designated position;
a scheduling module, configured to, for each consumable of the consumables, determine, based on predetermined information of the automated process, a path of the consumable to a respective designated position and a time instant at which the consumable is to be transferred to the designated position, where among the consumables, each consumable in the first group is transferred to a respective designated position prior to any consumable in the second group being transferred to a respective designated position; and
a control module, configured to, for each consumable of the consumables, control, based on the determined path and the determined time instant, an actuator in the automation system to transfer the consumable to the designated position.

### Embodiment 11

An electronic device, comprising a processor and a memory, is provided. A computer program instruction is stored in the memory, and the computer program instruction, when run by the processor, executes the method for controlling automated process termination described in any one of embodiments 1 to 9.

### Embodiment 12

A storage medium, storing a program instruction, is provided. The program instruction, when run, executes the method for controlling automated process termination described in any one of embodiments 1 to 9.

Although the embodiments have been described herein with reference to the drawings, it should be understood that the above embodiments are merely exemplary and are not intended to limit the scope of the present disclosure. Various changes and modifications may be made by those skilled in the art without departing from the scope and spirit of the present disclosure. All such changes and modifications are deemed to fall into the scope claimed by the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may use different methods to implement the described functions for each specific application, but such implementation should not be regarded as exceeding the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division manners in practical implementation, such as multiple units or components may be combined or integrated into another device, or some features may be neglected or not executed.

In the specification provided herein, a lot of specific details are explained. However, it can be understood that the embodiments of the present disclosure may be practiced without these specific details. In some embodiments, well-known methods, structures and techniques are not shown in detail in order to avoid obscuring understanding of the specification.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification may be combined in any way. Unless otherwise expressly stated, each feature disclosed in this specification (including the claims, abstract and drawings) may be replaced by an alternative feature that provides the same, equivalent or similar purpose.

In addition, it can be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments may be used in any combination.

The various component embodiments of the present disclosure may be implemented in hardware, or in software modules running on one or more processors, or in a combination thereof. It can be understood by those skilled in the art that a microprocessor or a digital signal processor (DSP) may be adopted in practice to realize some or all of the functions of some of the modules of the apparatus controlling automated process termination according to the embodiments of the present disclosure. The present disclosure may alternatively be implemented as a device program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising/including" does not exclude the presence of elements or steps not listed in the claims. The word "a" or "an" preceding an element does not exclude the presence of multiple of such elements. The present disclosure may be implemented by means of hardware including several different elements and by means of a suitably programmed computer. In a unit claim enumerating several apparatuses, several of these apparatuses may be embodied by a same hardware item. The use of the words "first", "second", "third" and the like does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those familiar with the art within the technical scope disclosed in the present disclosure shall fall within the protection scope of the present disclosure. The protection scope of the present disclosure shall be in accordance with the protection scope of the claims.

## Claims

1. A method for controlling automated process termination, **characterized by** comprising:
acquiring current positions of all consumables of an automated process in an automation system, wherein each of the consumables is for carrying a processing object of the automated process;
classifying, based on the current positions of all consumables, the consumables into a first group and a second group, wherein, among the consumables in the automation system, each consumable in the first group is permitted to be on a path of another consumable to a respective designated position, and each consumable in the second group is not permitted to be on a path of another consumable to a respective designated position;
for each consumable of the consumables, determining, based on predetermined information of the automated process, a path of the consumable to a respective designated position and a time instant at which the consumable is to be transferred to the designated position, wherein, among the consumables, each consumable in the first group is transferred to a respective designated position prior to any consumable in the second group being transferred to a respective designated position; and
for each consumable of the consumables, controlling, based on the determined path and the determined time instant, an actuator in the automation system to transfer the consumable to the designated position.

2. The method according to claim 1, **characterized in that**, the classifying, based on the current positions of all consumables, the consumables into a first group and a second group comprises:
classifying, among the consumables, a consumable at a transfer position in the automation system into the first group; and
classifying, among the consumables, a consumable other than the consumable in the first group into the second group, wherein the transfer position is a position where a consumable is transferred between robotic arms or between a robotic arm and another device in the automation system.

3. The method according to claim 1 or 2, **characterized in that**, for each consumable of the consumables, the determining, based on predetermined information of the automated process, a path of the consumable to a respective designated position and a time instant at which the consumable is to be transferred to the designated position, comprises:
among the consumables in the first group, determining, based on the predetermined information, that a blocking consumable is transferred to a designated position prior to a blocked consumable being transferred to a designated position, wherein
the blocking consumable blocks at least one consumable from being transferred to a designated position, and at least one blocking consumable is present on a path of the blocked consumable to a designated position.

4. The method according to claim 3, **characterized in that**, for each consumable of the consumables, the determining, based on predetermined information of the automated process, a path of the consumable to a respective designated position and a time instant at which the consumable is to be transferred to the designated position, comprises:
determining, based on the predetermined information, that a free consumable in the first group is transferred to a respective designated position prior to another consumable in the first group being transferred to a respective designated position, wherein
a path of the free consumable to the designated position has no intersection with a path of the another consumable in the first group to the designated position.

5. The method according to any one of claims 1 to 4, **characterized in that**, for each consumable of the consumables, the determining, based on predetermined information of the automated process, a time instant at which the consumable is to be transferred to the designated position, comprises:
for each consumable of the consumables,
determining, based on the predetermined information, the actuator for transferring the consumable to the respective designated position;
determining, based on the predetermined information, an end time instant of a preceding step performed before transferring the consumable to the designated position, wherein the preceding step is performed prior to the consumable leaving a current position; and
determining, based on the determined actuator and the determined end time instant of the preceding step, the time instant at which the consumable is to be transferred to the designated position.

6. The method according to claim 5, **characterized in that**, the determining, based on the determined actuator and the determined end time instant of the preceding step, the time instant at which the consumable is to be transferred to the designated position, comprises:
generating, based on the determined actuator and the determined end time instant of the preceding step, a step execution schedule; and
determining, based on the step execution schedule, the time instant at which the consumable is to be transferred to the designated position.

7. The method according to claim 6, **characterized in that**, the method further comprises:
determining, based on the step execution schedule, whether a device position conflict exists in the automation system during transferring the consumable to the designated position based on the determined path and the determined time instant.

8. The method according to any one of claims 1 to 7, **characterized in that**, for each consumable of the consumables, the determining, based on predetermined information of the automated process, a time instant at which the consumable is to be transferred to the designated position, comprises:
for each consumable of the consumables, determining, based on the predetermined information, one or more steps for transferring the consumable to the designated position; and
determining, in response to steps for transferring the consumable being more than one, that the steps are to be performed in a consecutive manner.

9. The method according to any one of claims 1 to 8, **characterized in that**, for each consumable of the consumables, the determining, based on predetermined information of the automated process, a time instant at which the consumable is to be transferred to the designated position, comprises:
for each consumable of the consumables, determining, based on the predetermined information, a step for transferring the consumable to the designated position; and
determining, based on the predetermined information, that the respective steps for transferring different consumables are to be performed in a sequential manner.

10. An apparatus for controlling automated process termination, **characterized by** comprising:
a position acquisition module, configured to acquire current positions of all consumables of an automated process in an automation system, wherein each of the consumables is for carrying a processing object of the automated process;
a grouping module, configured to classify, based on the current positions of all consumables, the consumables into a first group and a second group, wherein among the consumables, a current position of each consumable in the first group lies between a starting position and a designated position of a path of another consumable, and the path of the another consumable is for transferring the another consumable from the starting position to the designated position;
a scheduling module, configured to, for each consumable of the consumables, determine, based on predetermined information of the automated process, a path of the consumable to a respective designated position and a time instant at which the consumable is to be transferred to the designated position, wherein among the consumables, each consumable in the first group is transferred to a respective designated position prior to any consumable in the second group being transferred to a respective designated position; and
a control module, configured to, for each consumable of the consumables, control, based on the determined path and the determined time instant, an actuator in the automation system to transfer the consumable to the designated position.

11. An electronic device, comprising a processor and a memory, **characterized in that** a computer program instruction is stored in the memory, and the computer program instruction, when run by the processor, executes the method for controlling automated process termination according to any one of claims 1 to 9.

12. A storage medium, storing a program instruction, **characterized in that** the program instruction, when run, executes the method for controlling automated process termination according to any one of claims 1 to 9.
